# EUROPÄISCHE PATENTSCHRIFT

(11) **EP 2 649 322 B1**
(45) Veröffentlichungstag und Bekanntmachung des Hinweises auf die Patenterteilung: **14.11.2018**
(21) Anmeldenummer: 11788904.8
(22) Anmeldetag: 02.12.2011
(51) Int. Cl.: F04D 25/04, F04D 29/42, F04D 29/60, F04D 29/62, F02C 6/12, F02B 67/10

(54) **TURBOLADER, DER IN DEN ZYLINDERKOPF EINES MOTORS INTEGRIERT IST**
TURBOCHARGER WHICH IS INTEGRATED INTO THE CYLINDER HEAD OF AN ENGINE
TURBOCOMPRESSEUR INTÉGRÉ À LA CULASSE D'UN MOTEUR

(30) Priorität: 09.12.2010 DE 102010062749
(43) Veröffentlichungstag der Anmeldung: 16.10.2013
(73) Patentinhaber: Continental Automotive GmbH, 30165 Hannover (DE)
(72) Erfinder: FÄTH, Holger, 67136 Fußgönheim (DE); BÖNING, Ralf, 67829 Reiffelbach (DE)
(86) Internationale Anmeldenummer: PCT/EP2011/071646
(87) Internationale Veröffentlichungsnummer: WO 2012/076416

(56) Entgegenhaltungen:
- DE-A1-102007 017 854
- DE-C- 975 375
- JP-A- 57 052 624
- JP-A- 2002 303 145
- US-B1- 6 354 083

## Beschreibung

Verbrennungsmotor mit in den Zylinderkopf integriertem Turbolader.

Die Erfindung betrifft einen Motor, welcher einen in eine Aussparung eines Zylinderkopfes eines Verbrennungsmotors integrierten Turbolader aufweist.

Turbolader dienen dazu, den Wirkungsgrad eines Verbrennungsmotors zu verbessern und damit dessen Leistung zu steigern. Der Turbolader weist hierzu eine Turbine mit einem Turbinenrad und einen Verdichter mit einem Verdichterrad auf, wobei die beiden Laufräder auf einer gemeinsamen Welle angeordnet sind. Das Turbinenrad wird hierbei über einen Abgasmassenstrom einer angeschlossenen Brennkraftmaschine angetrieben und treibt wiederum das Verdichterrad an. Der Verdichter verdichtet angesaugte Frischluft und führt diese der Brennkraftmaschine zu. Die Welle ist in einem Lagergehäuse des Turboladers gelagert. Des Weiteren ist das Turbinenrad der Turbine in einem Turbinengehäuse angeordnet und das Verdichterrad des Verdichters in einem Verdichtergehäuse.

Ein solcher Turbolader hat im Betrieb an der Brennkraftmaschine bzw. einem angeschlossenen Motor verschiedenste Anforderungen zu erfüllen. Eine dieser Anforderungen besteht darin, die auftretenden hohen Temperaturen aufzunehmen, die beispielsweise aufgrund des heißen Abgasmassenstroms in dem Turboladergehäuse entstehen können.

Die übliche Konstruktion des Turboladers sieht dabei einzelne Gehäuse vor, die jeweils aus einem an die dort herrschende Temperatur angepassten Werkstoff bestehen. Dabei ist das Verdichtergehäuse üblicherweise aus Aluminium, während das Lagergehäuse aus Grauguss ist, wobei das Lagergehäuse zusätzlich auch wassergekühlt ausgeführt sein kann. Das Turbinengehäuse besteht im Allgemeinen aufgrund der hohen Temperaturen, die in diesem Bereich herrschen, aus Werkstoffen mit einem hohen Nickelanteil. Aufgrund der angepassten, unterschiedlichen Werkstoffe für die einzelnen Gehäuse sind diese Gehäuse als separate Teile ausgebildet, die miteinander verbunden sind und dabei außerdem gegeneinander abgedichtet sein müssen. Ein solcher Turbolader ist daher aufwendig in der Herstellung und der Montage.

In der DE 10 2009 053 106 ist ein Turboladergehäuse beschrieben, welches teilweise oder vollständig in Längsrichtung in zwei Gehäusehälften geteilt ausgebildet ist, wobei der in Längsrichtung geteilte Abschnitt des Turboladergehäuses ein Verdichtergehäuse, ein Lagergehäuse und/oder ein Turbinengehäuse aufweist. Ein derartiges Turboladergehäuse hat den Vorteil, dass das Laufzeug, d. h. die Laufräder auf der Welle sowie die Lageranordnung der Welle, vormontiert werden kann und dann komplett in die Gehäusehälften eingelegt werden kann. Des Weiteren kann das Laufzeug vor dem Montieren in die Gehäusehälften einem Betriebsauswuchten unterzogen werden. Die beiden Gehäusehälften werden miteinander verschraubt und müssen gegeneinander abgedichtet werden. Des Weiteren enthält die DE 10 2009 053 106 Hinweise dahingehend, dass eine Hälfte oder das gesamte Turboladergehäuse in einen Motorblock und/oder in den Zylinderkopf eines angeschlossenen Motors integriert werden kann.

Aus der DE 975 375 C ist ein Turbolader bekannt, der eine Turbine mit einem Turbinenrad, einen Verdichter mit einem Verdichterrad und eine in einer Lagerungseinrichtung gelagerte Welle aufweist, wobei das Turbinenrad und das Verdichterrad auf der Welle angeordnet sind, das Turbinenrad in einem Turbinengehäuse angeordnet ist, das Verdichterrad in einem Verdichtergehäuse angeordnet ist, der Turbolader in eine Aussparung des Zylinderkopfes eines Motors integriert ist und das Turbinengehäuse und das Verdichtergehäuse in den Zylinderkopf eingeformt sind.

Aus der JP 2002-303145 ist ein Turbolader bekannt, der eine Turbine mit einem Turbinenrad, einen Verdichter mit einem Verdichterrad und eine in einer Lagerungseinrichtung gelagerte Welle aufweist, wobei das Turbinenrad und das Verdichterrad auf der Welle angeordnet sind, das Turbinenrad in einem Turbinengehäuse angeordnet ist, das Verdichterrad in einem Verdichtergehäuse angeordnet ist, der Turbolader in eine Aussparung des Zylinderkopfes eines Motors integriert ist und das Turbinengehäuse in den Zylinderkopf eingeformt ist.

Die Aufgabe der Erfindung besteht darin, einen Weg aufzuzeigen, wie das Gewicht eines Verbrennungsmotors verringert werden kann.

Diese Aufgabe wird durch einen Verbrennungsmotor mit den im Anspruch 1 angegebenen Merkmalen gelöst. Vorteilhafte Ausgestaltungen und Weiterbildungen der Erfindung sind in den abhängigen Ansprüchen angegeben.

Die Vorteile der Erfindung beruhen insbesondere darauf, dass der Zylinderkopf eines Verbrennungsmotors als Turbinengehäuse verwendet wird. Dabei ist die Innenkontur des Zylinderkopfes derart ausgeformt, dass sie der gewünschten Form des Turbinengehäuses entspricht. Durch diese Mitbenutzung des Zylinderkopfes als Turbinengehäuse benötigt die Turbine des Turboladers kein zusätzliches eigenes

Gehäuse. Des Weiteren ergeben sich durch die Mitbenutzung des Zylinderkopfes als Turbinengehäuse eine deutliche Reduktion des Gewichts des Motors, ein besseres Package und verminderte Systemkosten. So bedarf es keiner zusätzlichen Leitungen, Halter, etc..

Erfindungsgemäß wird die Lagerungseinheit mit der Welle, dem Turbinenrad und dem Verdichterrad in Axialrichtung in eine Aussparung des Zylinderkopfes eingesetzt. Dadurch hat man die Möglichkeit, die notwendige Abdichtung der Kühlwasserversorgung und der Ölversorgung des Turboladers mittels einer einzigen axialen Dichtung zu realisieren, bei welcher es sich vorzugsweise um eine Flächendichtung handelt.

Diese Flächendichtung hat in vorteilhafter Weise einen Durchbruch für den Ölzulauf, einen Durchbruch für den Wasserzulauf, einen Durchbruch für den Wasserablauf und Durchbrüche für Befestigungsmittel, mittels welcher der Turbolader im bzw. am Zylinderkopf befestigt ist. Bei diesen Befestigungsmitteln handelt es sich beispielsweise um Zuganker, die einen festen Sitz des Turboladers im Zylinderkopf gewährleisten.

Weitere vorteilhafte Ausgestalten und Weiterbildungen der Erfindung ergeben sich aus deren beispielhafter Erläuterung anhand der Figuren. Es zeigt
- Figur 1: eine erste Schnittdarstellung zur Erläuterung eines in den Zylinderkopf eines Motors eingebauten Turboladers,
- Figur 2: eine zweite Schnittdarstellung zur Erläuterung eines in den Zylinderkopf eines Motors eingebauten Turboladers,
- Figur 3: eine dritte Schnittdarstellung zur Erläuterung eines in den Zylinderkopf eines Motors eingebauten Turboladers und
- Figur 4: eine Skizze zur Veranschaulichung eines Ausführungsbeispiels für einen Dichtring.

Nachfolgend wird ein Turbolader beschrieben, der eine Turbine mit einem Turbinenrad, einen Verdichter mit einem Verdichterrad und eine in einer Lagerungseinheit gelagerte Welle aufweist, wobei das Turbinenrad und das Verdichterrad auf der Welle angeordnet sind, das Turbinenrad in einem Turbinengehäuse angeordnet ist, das Verdichterrad in einem Verdichtergehäuse angeordnet ist und der Turbolader in eine Aussparung des Zylinderkopfes eines Motors integriert ist, wobei das Turbinengehäuse in den Zylinderkopf eingeformt ist und die Lagerungseinheit mit der Welle, dem Turbinenrad und dem Verdichterrad in Axialrichtung der Welle in die Aussparung des Zylinderkopfes eingesetzt ist.

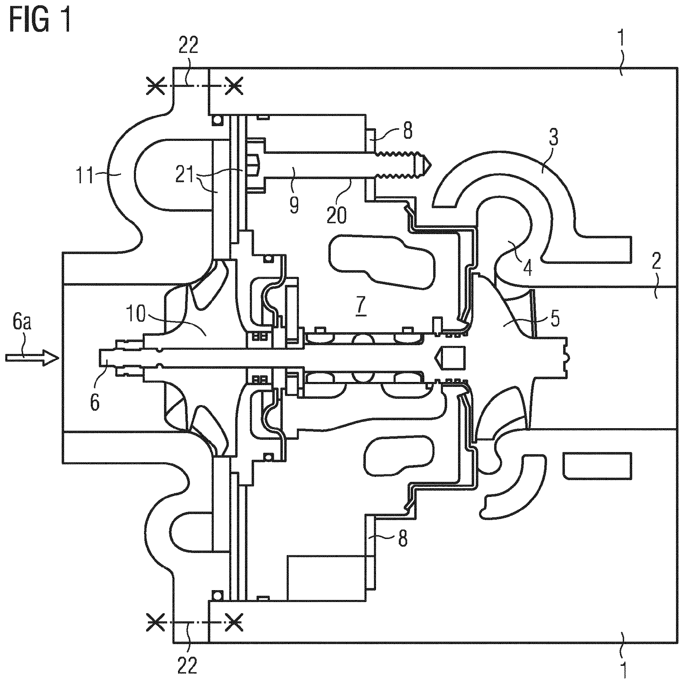

Die Figur 1 zeigt eine erste Schnittdarstellung zur Erläuterung eines in den Zylinderkopf eines Motors eingebauten Turboladers. Dabei ist in der Figur 1 und auch in den nachfolgenden Figuren nur der Teil des Zylinderkopfes dargestellt, in welchen der Turbolader eingebaut ist.

Der Turbolader weist eine Turbine, einen Verdichter und eine Lagerungseinheit auf. In dieser Lagerungseinheit ist eine Welle 6 gelagert, auf welcher ein Verdichterrad 10 des Verdichters und ein Turbinenrad 5 der Turbine angeordnet sind.

Als Gehäuse der Turbine dient der Zylinderkopf 1. Zu diesem Zweck ist der Zylinderkopf in seinem Innenbereich derart ausgeformt, dass er die Form eines Turbinengehäuses aufweist. In diesem Turbinengehäuse ist unter anderem eine Aussparung vorgesehen, innerhalb welcher das Turbinenrad 5 des Turboladers drehbar gelagert ist. Des Weiteren sind im Bereich des Turbinengehäuses weitere Aussparungen bzw. Kanäle vorgesehen, durch welche - wie noch unten anhand der weiteren Figuren erläutert wird - die Kühlwasserversorgung des Turboladers erfolgt. So ist in der Figur 1 mit der Bezugszahl 3 ein Kühlwasserkanal bezeichnet. Des Weiteren ist im Bereich des Turbinengehäuses ein turbinenseitiger Strömungsraum 4 vorgesehen. Ferner weist der Zylinderkopf 1 eine mittige Aussparung 2 auf, bei der es sich um den Abgaskanal des Motors handelt. Durch das durch den Abgaskanal strömende Abgas wird das Turbinenrad 5 angetrieben, welches über die Welle 6 seinerseits das Verdichterrad 10 des Verdichters antreibt, um den nicht gezeichneten Zylindern des Motors eine erhöhte Frischluftmenge zuzuführen.

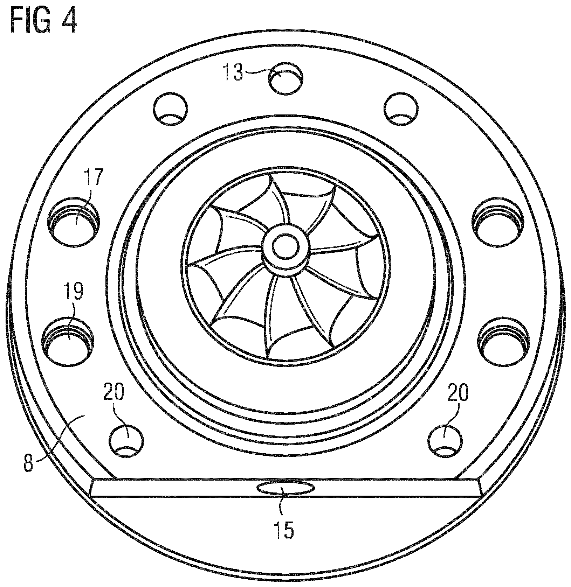

Der Übergangsbereich zwischen dem Turbinengehäuse und der Lagerungseinheit 7 des Turboladers ist mit einer Dichtung 8 versehen, mittels welcher die Kühlwasserversorgung des Turboladers abgedichtet ist. Bei dieser Dichtung 8 handelt es sich - wie noch unten anhand der Figur 4 erläutert wird - um eine Flächendichtung.

Durch Befestigungsmitteldurchbrüche 20 dieser Flächendichtung 8 sind Befestigungsmittel 9 geführt, mittels welcher der Abgasturbolader in einer Aussparung des Zylinderkopfes befestigt ist. Als Befestigungsmittel werden vorzugsweise Zuganker verwendet. Diese Befestigungsmittel 9 sind durch die Lagerungseinheit 7 hindurchgeführt und dienen zur Befestigung der Lagerungseinheit 7 und der Turbine im Zylinderkopf 1.

Das Verdichtergehäuse 11, innerhalb dessen das Verdichterrad 10 auf der Welle 6 befestigt ist, bildet ein Verschlusselement für die Aussparung des Zylinderkopfes, in welche der Turbolader eingebaut ist. Das Verdichtergehäuse 11 ist entweder an der Lagerungseinheit 7 oder am Zylinderkopf 1 befestigt. Alternativ dazu können die Befestigungsmittel 9 auch zur Befestigung des gesamten Turboladers am Zylinderkopf 1 verwendet werden. Eine Befestigung des Verdichtergehäuses 11 am Zylinderkopf 1 wird in der Figur 1 durch die Bezugszahl 22 veranschaulicht. Innerhalb des Verdichters befindet sich ein verdichterseitiger Strömungsraum 21, innerhalb dessen ein Diffusorblech angeordnet ist.

Beim Zusammenbau des Turboladers erfolgt zunächst der Zusammenbau einer Baueinheit, die die Welle 6, die Lagerungseinheit 7, das Turbinenrad 5 und das Verdichterrad 10 aufweist. Diese Baueinheit wird komplett in Axialrichtung 6a der Welle 6 in die Aussparung des Zylinderkopfes 1 eingesetzt, in welcher sich bereits das in den Zylinderkopf eingeformte Turbinengehäuse befindet.

Anschließend erfolgt noch ein Einsetzen des Verdichtergehäuses 11 in den Zylinderkopf 1 und ein Befestigen des Verdichtergehäuses am Zylinderkopf 1. Das in den Zylinderkopf 1 eingesetzte und an diesem befestigte Verdichtergehäuse 11 bildet ein Verschlusselement bzw. einen Deckel für die Aussparung des Zylinderkopfes, in welche der Turbolader eingesetzt ist.

Wie bereits oben erwähnt wurde erfolgt die Kühlwasserversorgung des Turboladers durch den Zylinderkopf, so dass es keiner gesonderten Leitungen, keiner gesonderten Dichtungen und auch keiner gesonderten Halter bedarf.

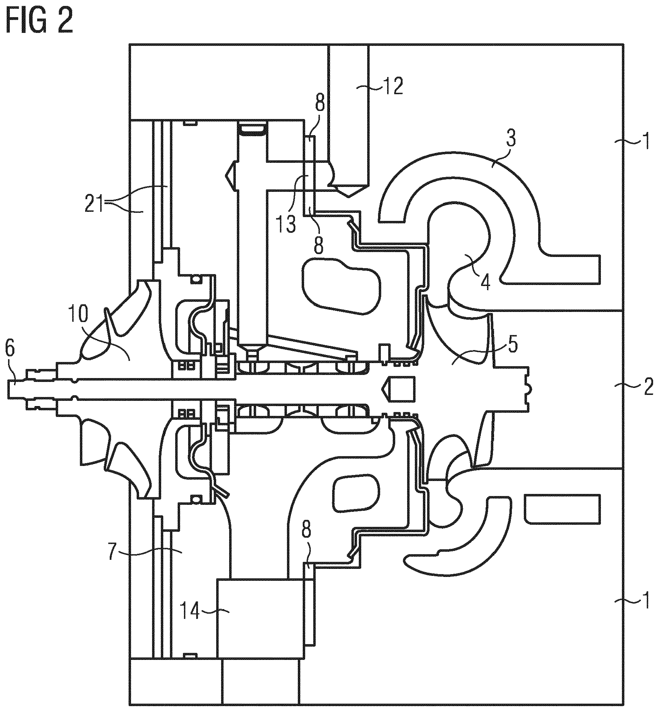

Die Figur 2 zeigt eine zweite Schnittdarstellung zur Erläuterung eines in den Zylinderkopf 1 eines Motors eingebauten Turboladers, wobei in dieser zweiten Schnittdarstellung die Ölversorgung des Turboladers genauer veranschaulicht ist. So ist in der Figur 2 der durch den Zylinderkopf 1 verlaufende Ölzulauf 12 gezeigt. Dieser führt durch einen Durchbruch 13 für den Ölzulauf, der in der Flächendichtung 8 vorgesehen ist, in die Lagerungseinheit 7, in welcher das Öl in gewünschter Weise verteilt wird. Des Weiteren ist in der Figur 2 ein Ölablauf 14 gezeigt, welcher durch eine aus der Figur 2 nicht ersichtliche Ölablauföffnung mit einem Ölablauf des Zylinderkopfes 1 kontaktiert ist. Folglich erfolgt die Ölzufuhr und der Ölablauf des Turboladers jeweils durch Kanäle, über welche der Turbolader mit jeweils zugehörigen Kanälen im Zylinderkopf in Verbindung steht.

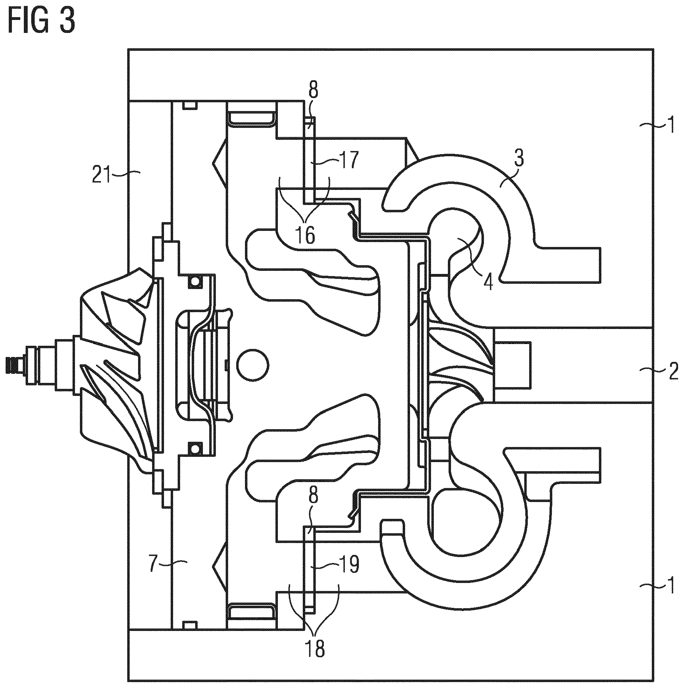

Die Figur 3 zeigt eine dritte Schnittdarstellung zur Erläuterung eines in den Zylinderkopf eines Motors eingebauten Turboladers, wobei in dieser dritten Schnittdarstellung die Kühlwasserversorgung des Turboladers genauer veranschaulicht ist. So ist in der Figur 3 der durch den Zylinderkopf verlaufende, mit dem Kühlwasserkanal 3 des Zylinderkopfes verbundene Wasserzulauf 16 gezeigt. Dieser Wasserzulauf 16 führt durch einen Durchbruch 17, der in der Flächendichtung 8 vorgesehen ist, in die Lagerungseinheit 7, um die dort benötigte Kühlung durchzuführen. Des Weiteren ist in der Figur 3 ein Wasserablauf 18 gezeigt, welcher durch einen Durchbruch 19 der Flächendichtung 8 mit einem Wasserablauf des Zylinderkopfes 1 kontaktiert ist. Folglich erfolgt die Kühlwasserzufuhr und der Wasserablauf des Turboladers jeweils durch Durchbrüche der Flächendichtung 8, über welche der Turbolader mit jeweils zugehörigen Kanälen im Zylinderkopf 1 in Verbindung steht.

Die Figur 4 zeigt eine Skizze zur Veranschaulichung eines Ausführungsbeispiels für eine Flächendichtung 8, durch welche die Kühlwasserversorgung des Turboladers abgedichtet ist. Diese Flächendichtung 8 weist einen Durchbruch 13 für den Ölzulauf, einen Durchbruch 17 für den Wasserzulauf, einen Durchbruch 19 für den Wasserablauf und Durchbrüche 20 für Befestigungsmittel auf. Durch diese Befestigungsmitteldurchbrüche 20 können beim Zusammenbau des Turboladers die Befestigungsmittel geführt werden, mittels welcher die Lagerungseinheit 7 und die Turbine oder der gesamte Turbolader am Zylinderkopf befestigt werden. Des Weiteren ist in der Figur 4 eine Ölablauföffnung 15 gezeigt, durch welche Öl aus der Lagereinheit abgeführt wird.

## Patentansprüche

1. Verbrennungsmotor, welcher einen in eine Aussparung des Zylinderkopfes des Verbrennungsmotors integrierten Turbolader aufweist, welcher eine Turbine mit einem Turbinenrad (5), einen Verdichter mit einem Verdichterrad (10) und eine in einer Lagerungseinheit (7) gelagerte Welle (6) aufweist, wobei das Turbinenrad (5) und das Verdichterrad (10) auf der Welle (6) angeordnet sind, das Turbinenrad (5) in einem Turbinengehäuse angeordnet ist, das Verdichterrad (10) in einem Verdichtergehäuse (11) angeordnet ist und das Turbinengehäuse in den Zylinderkopf (1) eingeformt ist, **dadurch gekennzeichnet, dass** die Lagerungseinheit (7) mit der Welle (6), dem Turbinenrad (5) und dem Verdichterrad (10) in Axialrichtung (6a) der Welle in die Aussparung des Zylinderkopfes eingesetzt ist und das Verdichtergehäuse (11) ein Verschlusselement für die Aussparung des Zylinderkopfes bildet.

2. Verbrennungsmotor nach Anspruch 1, **dadurch gekennzeichnet, dass** das Verdichtergehäuse (11) am Zylinderkopf befestigt ist.

3. Verbrennungsmotor nach Anspruch 1, **dadurch gekennzeichnet, dass** das Verdichtergehäuse (11) an einem Gehäuse der Lagerungseinheit befestigt ist.

4. Verbrennungsmotor nach einem der vorhergehenden Ansprüche, **dadurch gekennzeichnet, dass** seine Kühlwasserversorgung durch den Zylinderkopf erfolgt.

5. Verbrennungsmotor nach einem der vorhergehenden Ansprüche, **dadurch gekennzeichnet, dass** seine Ölversorgung durch den Zylinderkopf erfolgt.

6. Verbrennungsmotor nach Anspruch 4 oder 5, **dadurch gekennzeichnet, dass** eine Abdichtung der Kühlwasserersorgung des Turboladers durch eine einzige axiale Dichtung erfolgt.

7. Verbrennungsmotor nach Anspruch 6, **dadurch gekennzeichnet, dass** die axiale Dichtung eine Flächendichtung (8) ist.

8. Verbrennungsmotor nach Anspruch 7, **dadurch gekennzeichnet, dass** die Flächendichtung (8) einen Durchbruch (13) für den Ölzulauf aufweist.

9. Verbrennungsmotor nach Anspruch 7 oder 8, **dadurch gekennzeichnet, dass** die Flächendichtung (8) einen Durchbruch (17) für den Wasserzulauf und einen Durchbruch (19) für den Wasserablauf aufweist.

10. Verbrennungsmotor nach einem der Ansprüche 7 bis 9, **dadurch gekennzeichnet, dass** die Flächendichtung (8) Durchbrüche (20) für Befestigungsmittel aufweist.

## Claims

1. Internal combustion engine which has a turbocharger integrated into an aperture in the cylinder head of the internal combustion engine, which turbocharger has a turbine with a turbine wheel (5), a compressor with a compressor wheel (10), and a shaft (6) mounted in a bearing unit (7), wherein the turbine wheel (5) and the compressor wheel (10) are arranged on the shaft (6), the turbine wheel (5) is arranged in a turbine housing, the compressor wheel (10) is arranged in a compressor housing (11) and the turbine housing is formed integrally in the cylinder head (1), **characterized in that** the bearing unit (7) is inserted with the shaft (6), the turbine wheel (5) and the compressor wheel (10) into the aperture in the cylinder head, in the axial direction (6a) of the shaft and the compressor housing (11) forms a closure element for the aperture in the cylinder head.

2. Internal combustion engine according to Claim 1, **characterized in that** the compressor housing (11) is fastened to the cylinder head.

3. Internal combustion engine according to Claim 1, **characterized in that** the compressor housing (11) is fastened to a housing of the bearing unit.

4. Internal combustion engine according to one of the preceding claims, **characterized in that** cooling water is supplied to said internal combustion engine through the cylinder head.

5. Internal combustion engine according to one of the preceding claims, **characterized in that** oil is supplied to said internal combustion engine through the cylinder head.

6. Internal combustion engine according to Claim 4 or 5, **characterized in that** the cooling water supply to the turbocharger is sealed off by a single axial seal.

7. Internal combustion engine according to Claim 6, **characterized in that** the axial seal is a flat gasket (8).

8. Internal combustion engine according to Claim 7, **characterized in that** the flat gasket (8) has an opening (13) for the oil inlet.

9. Internal combustion engine according to Claim 7 or 8, **characterized in that** the flat gasket (8) has an opening (17) for the water inlet and an opening (19) for the water outlet.

10. Internal combustion engine according to one of Claims 7 to 9, **characterized in that** the flat gasket (8) has openings (20) for fastening means.

## Revendications

1. Moteur à combustion interne, qui présente un turbocompresseur intégré dans un évidement de la culasse du moteur à combustion interne, qui présente une turbine avec une roue de turbine (5), un compresseur avec une roue de compresseur (10) et un arbre (6) supporté dans une unité de palier (7), la roue de turbine (5) et la roue de compresseur (10) étant disposées sur l'arbre (6), la roue de turbine (5) étant disposée dans un carter de turbine, la roue de compresseur (10) étant disposée dans un carter de compresseur (11) et le carter de turbine étant formé dans la culasse (1), **caractérisé en ce que** l'unité de palier (7) est insérée avec l'arbre (6), la roue de turbine (5) et la roue de compresseur (10) dans la direction axiale (6a) de l'arbre dans l'évidement de la culasse et le carter de compresseur (11) forme un élément de fermeture pour l'évidement de la culasse.

2. Moteur à combustion interne selon la revendication 1, **caractérisé en ce que** le carter de compresseur (11) est fixé sur la culasse.

3. Moteur à combustion interne selon la revendication 1, **caractérisé en ce que** le carter de compresseur (11) est fixé à un boîtier de l'unité de palier.

4. Moteur à combustion interne selon l'une quelconque des revendications précédentes, **caractérisé en ce que** son alimentation en eau de refroidissement s'effectue par le biais de la culasse.

5. Moteur à combustion interne selon l'une quelconque des revendications précédentes, **caractérisé en ce que** son alimentation en huile s'effectue par le biais de la culasse.

6. Moteur à combustion interne selon la revendication 4 ou 5, **caractérisé en ce qu'**une étanchéité de l'alimentation en eau de refroidissement du turbocompresseur s'effectue par un joint d'étanchéité axial unique.

7. Moteur à combustion interne selon la revendication 6, **caractérisé en ce que** le joint d'étanchéité axial est un joint d'étanchéité pour plan de joint (8).

8. Moteur à combustion interne selon la revendication 7, **caractérisé en ce que** le joint d'étanchéité pour plan de joint (8) présente un orifice (13) pour l'alimentation en huile.

9. Moteur à combustion interne selon la revendication 7 ou 8, **caractérisé en ce que** le joint d'étanchéité pour plan de joint (8) présente un orifice (17) pour l'alimentation en eau et un orifice (19) pour l'évacuation d'eau.

10. Moteur à combustion interne selon l'une quelconque des revendications 7 à 9, **caractérisé en ce que** le joint d'étanchéité pour plan de joint (8) présente des orifices (20) pour des moyens de fixation.
